Europäisches Patentamt

European Patent Office

Office européen des brevets

(11) Veröffentlichungsnummer: **0 270 743**
**A2**

# (12) EUROPÄISCHE PATENTANMELDUNG

(21) Anmeldenummer: **87112192.7**

(22) Anmeldetag: **22.08.87**

(51) Int. Cl.⁴: **G01G 19/04**

(30) Priorität: **13.11.86 DE 3638778**

(43) Veröffentlichungstag der Anmeldung:
**15.06.88 Patentblatt 88/24**

(84) Benannte Vertragsstaaten:
**AT CH DE FR LI**

(71) Anmelder: **ASEA INDUSTRIE UND
AUTOMATION GMBH
Burgunderstrasse 27-29
D-4000 Düsseldorf 11(DE)**

(72) Erfinder: **Pietzsch, Udo, Dipl.-Ing.
Schnickvenn 14
D-5106 Roetgen(DE)**
Erfinder: **Schwab, Wolfram, Dipl.-Ing.
Oppener Strasse 147
D-5102 Würselen(DE)**

(74) Vertreter: **Niemann, Uwe, Dr.-Ing.
Ahornstrasse 41
D-4300 Essen 1(DE)** .

(54) **Verfahren zum Bestimmen der Radlasten schnellfahrender Schienenfahrzeuge und Vorrichtung zur Durchführung des Verfahrens.**

(57) Die Erfindung betrifft ein Verfahren und eine Vorrichtung zum Bestimmen der Radlasten - schnellfahrender Schienenfahrzeuge aus dem Meßsignal wenigstens einer Meßstelle mit wenigstens einem am Steg einer Schiene in Höhe der neutralen Faser befestigten Dehnungsmeßstreifen, dessen Hauptwirkungsrichtung zur Messung der Stauchung des Steges beim Überlauf des Rades orthogonal zur neutralen Faser angeordnet ist, wobei das Meßsignal oberhalb eines Schwellenwertes erfaßt sowie in digitale Meßwerte umgesetzt wird und aus aufeinanderfolgenden Meßwerten eine Ausgleichsfunktion gebildet wird, aus deren Maximum und dem Schwellenwert die Radlast bestimmt wird. Um den Aufwand für die Datenverarbeitung zu reduzieren, sollen die anfallenden digitalen Meßwerte einzeln und nacheinander einem rekursiven Tiefpaßfilter wenigstens zweiter Ordnung zugeführt werden, wobei der aktuelle Filterwert abgespeichert wird und die Radlast aus dem maximalen Filterwert und dem Schwellenwert bestimmt wird.

Fig. 1

## Verfahren zum Bestimmen der Radlasten schnellfahrender Schienenfahrzeuge und Vorrichtung zur Durchführung des Verfahrens

Die Erfindung betrifft ein Verfahren zum Bestimmen der Radlasten schnellfahrender Schienenfahrzeuge aus dem Meßsignal wenigstens einer Meßstelle mit wenigstens einem am Steg einer Schiene in Höhe der neutralen Faser befestigten Dehnungsmeßstreifen, dessen Hauptwirkungsrichtung zur Messung der Stauchung des Steges beim Überlauf des Rades orthogonal zur neutralen Faser angeordnet ist, wobei des Meßsignal oberhalb eines Schwellenwertes erfaßt sowie in digitale Meßwerte umgesetzt wird und aus aufeinanderfolgenden Meßwerten eine Ausgleichsfunktion gebildet wird, aus deren Maximum und dem Schwellenwert die Radlast bestimmt wird.

Bei einem bekannten Verfahren dieser Gattung (DE-PS 32 26 740) werden die Radlasten aus Stauchungen des Schienenstegs unter der Wirkung des überlaufenden Rades bestimmt. Dazu werden auf den Schienensteg ein oder mehrere Dehnungsmeßstreifen geklebt, die so orientiert sind, daß ihre Hauptwirkungsrichtung sich orthogonal zur neutralen Faser, d.h. vertikal, erstreckt. Beim Überlauf eines Rades über eine Meßstelle erhält man ein Meßsignal, dessen Form in grober Annäherung ungefähr der Gaußschen Glockenkurve entspricht, die oberhalb eines bestimmten Schwellenwertes mit guter Genauigkeit durch ein verhältnismäßig einfaches Ausgleichspolynom, insbesondere eines Ausgleichsparabel, angenähert werden kann. Damit werden hochfrequente regellose Störungen, die das eigentliche Meßsignal überlagern, unterdrückt. Das bekannte Verfahren hat sich an sich bewährt, es benötigt jedoch zur Datenverarbeitung einen verhältnimäßig großen Aufwand und hat auch dort seine Grenzen, wo die Berechnung des Ausgleichspolynoms mehr Zeit beansprucht als der eigentliche Meßvorgang, weil dann nicht mehr im On-Line-Betrieb gearbeitet werden kann.

Aufgabe der Erfindung ist es, bei einem Verfahren der eingangs beschriebenen Gattung den Aufwand für die Datenverarbeitung zu reduzieren.

Diese Aufgabe wird dadurch gelöst, daß die anfallenden digitalen Meßwerte einzeln und nacheinander einem rekursiven Tiefpaßfilter wenigstens zweiter Ordnung zugeführt werden, daß der aktuelle Filterwert abgespeichert wird und daß die Radlast aus dem maximalen Filterwert und dem Schwellenwert bestimmt wird. Dieses Verfahren arbeitet sehr schnell und liefert für jeden abgetasteten Meßwert praktisch unmittelbar einen aktuellen Filterwert, der dem von regellosen Störungen befreiten Meßwert entspricht. Für die Durchführung des Verfahrens genügt ein rekursiver Tiefpaßfilter zweiter Ordnung, das lediglich drei dynamische Speicherzellen aufweist und insbesondere nach einem Filteralgorithmus der Formel

$$y_k = a \cdot y_{k-1} - b \cdot y_{k-2} + x_k$$

arbeitet, wobei $y_k$ = der aktuelle Filterwert
$y_{k-1}, y_{k-2}$ = abgespeicherte Filterwerte
$x_k$ = der aktuelle Meßwert und
$a, b$ = Systemparameter
sind. Die Größe der Systemparameter hängt von der Abtastfrequenz der Meßwerte und auch von der Frequenz der vorliegenden Störungen ab. Beginn und Ende der Datenverarbeitung können vom Meßsignal selbst bei Über- bzw. Unterschreitung des Schwellenwertes gesteuert werden.

Besonders günstig im Hinblick auf den erforderlichen Speicherplatz werden die Verhältnisse dann, wenn der aktuelle Filterwert mit dem maximalen Filterwert verglichen wird und nur der jeweils maximale Filterwert abgespeichert wird.

Die Genauigkeit der ermittelten Radlast wird verbessert, wenn die Radlast durch gewichtete Mittelwertbildung der maximalen Filterwerte aus den Meßsignalen mehrerer aufeinanderfolgender Meßstellen bestimmt wird. Eine solche Reihe aufeinanderfolgender Meßstellen wird in der Regel ohnehin vorgesehen, weil die Meßsignale nicht nur von hochfrequenten Störungen, sondern auch von niederfrequenten Störungen überlagert sind, die sich aus dem sogenannten Sinuslauf ergeben.

Für die Durchführung des Verfahrens eignet sich eine Vorrichtung mit wenigstens einem Meßverstärker, einem dem Meßverstärker nachgeschalteten Analog-Digital-Wandler und einem auf einen Schwellenwert einstellbaren Trigger sowie einem Prozessor, die dadurch gekennzeichnet ist, daß der Prozessor ein rekursives Tiefpaßfilter zweiter Ordnung aufweist.

Im folgenden wird ein in der Zeichnung dargestelltes Ausführungsbeispiel der Erfindung erläutert; es zeigen:

Fig. 1 in schematischer Darstellung eine Draufsicht auf einen Teil einer Meßstrecke zum Messen der Radlasten schnellfahrender Schienenfahrzeuge,

Fig. 2 schematisch das geglättete Meßsignal zweier zusammengeschalteter Meßstellen.

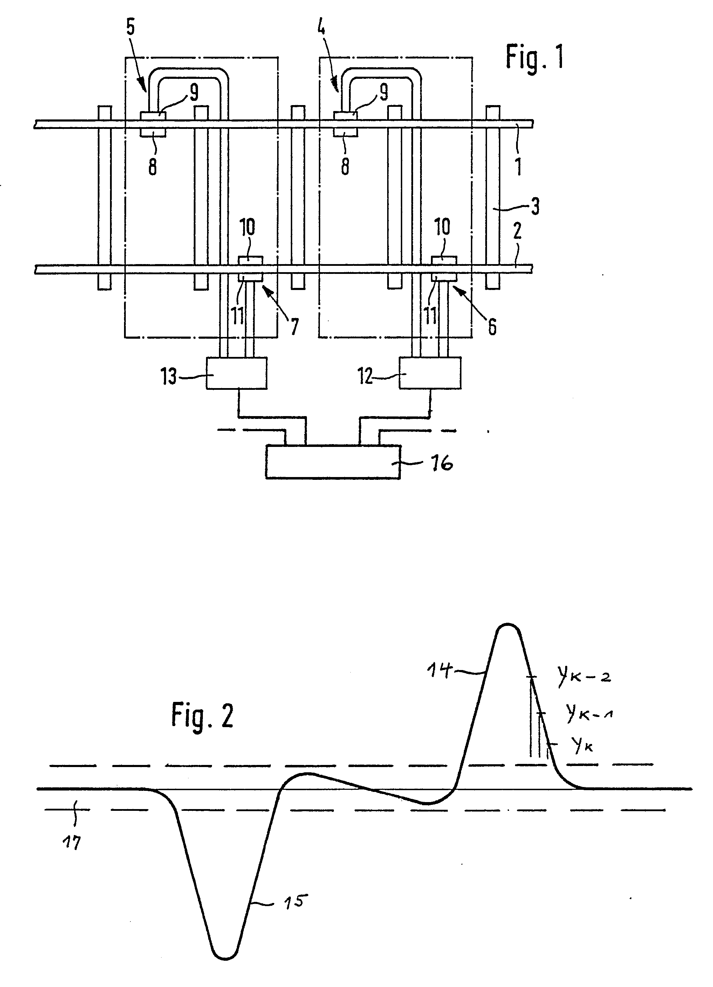

Zu dem in Figur 1 dargestellten Gleis gehören zwei Schienen 1, 2, die auf Schwellen 3 verlegt sind. An der Schiene 1 befinden sich Meßstellen 4,5 und an der Schiene 2 Meßstellen 6, 7 zum Messen der Radlasten von die Schienen 1, 2 überlaufenden Rädern eines Schienenfahrzeuges.

An jeder Schiene 1 bzw. 2 sind lediglich zwei Meßstellen 4,5 bzw. 6, 7 dargestellt. Die Meßstrecke umfaßt jedoch bis zu 16 Meßstellen an jeder Schiene 1, 2.

Die Meßstellen 4 - 7 sind jeweils im Bereich zwischen den Schwellen 3 angeordnet. Der Abstand der Meßstellen 4,5 bzw. 6, 7 untereinander ist im wesentlichen gleich. Er entspricht im wesentlichen dem dreifachen Schwellenabstand. Wie dargestellt, sind die Meßstellen 4,5 der Schiene 1 gegenüber den Meßstellen 6, 7 der Schiene 2 in Gleisrichtung zueinander versetzt, so daß jedes Feld zwischen zwei benachbarten Schwellen eine Meßstelle entweder an der Schiene 1 oder an der Schiene 2 aufweist.

Zu jeder Meßstelle 4, 5 gehören Dehnungsmeßstreifen 8, 9, die beidseits am Steg der Schiene 1 in Höhe der neutralen Faser der Schiene so befestigt sind, daß sich ihre Hauptwirkungsrichtung senkrecht zur neutralen Faser, d.h. vertikal, erstreckt. Entsprechendes gilt für die Meßstellen 6,7 der Schiene 2, zu denen jeweils Dehnungsmeßstreifen 10, 11 gehören.

Die Dehnungsmeßstreifen 8, 9 der Meßstelle 4 sind mit den Dehnungsmeßstreifen 10, 11 der Meßstelle 6 an einen gemeinsamen Meßverstärker 12 angeschlossen. Die Dehnungsmeßstreifen 8, 9 der Meßstelle 5 sind zusammen mit den Dehnungsmeßstreifen 10, 11 der Meßstelle 7 ebenfalls an einen gemeinsamen Meßverstärker 13 angeschlossen. Entsprechendes gilt auch für die einander gegenüberliegenden Meßstellen der Schienen 1, 2 der weiteren Meßstrecke.

Beim Überlauf einer Achse über die zusammengeschalteten Meßstellen 4,6 bzw. 5, 7 sowie weiterer zusammengeschalteter Meßstellen der Meßstrecke ergibt sich das in Figur 2 in geglätteter Form wiedergegebene Meßsignal. Dementsprechend liefert jeder Meßverstärker 12 bzw. 13 an seinem Ausgang ein Meßsignal mit einem positiven Signalabschnitt 14 und einem negativen Signalabschnitt 15. Der positive Signalabschnitt 14 entspricht dem Meßsignal der Dehnungsmeßstreifen 8, 9, und der negative Signalanteil 15 entspricht dem Meßsignal der Dehnungsmeßstreifen 10, 11. Aufgrund ihres unterschiedlichen Vorzeichens können die beiden Signalanteile 14, 15 ohne weiteres identifiziert werden.

Die an den Ausgängen der Meßverstärker 12, 13 anliegenden Meßsignale sind von hochfrequenten, regellosen Störungen überlagert. Sie werden deshalb in einem Prozessor 16 wie folgt bearbeitet: Zunächst werden die Meßsignale mit einer vorgegebenen Abtastfrequenz abgetastet und in einem Analog-Digital-Wandler digitalisiert. In den Signalfluß ist auch ein Trigger geschaltet, der auf ein vorbestimmtes Shwellenband 17 eingestellt ist und dadurch sowohl im positiven als auch im negativen Signalbereich einen Schwellenwert definiert. Dieser Trigger trennt das Meßsignal in einen konstanten, durch das Schwellenwert definierten Signalanteil und einen veränderlichen Signalanteil 14 bzw. 15, der das Schwellenband überschreitet.

Die das Schwellenband 17 überschreitenden Meßwerte werden einzeln und nacheinander einem rekursiven Tiefpaßfilter zweiter Ordnung zugeführt und in diesem nach der folgenden Formel verarbeitet:

$$y_k = a \cdot y_{k-1} - b \cdot y_{k-2} + x_k$$

wobei

$y_k$ = der aktuelle Filterwert
$y_{k-1}$, $y_{k-2}$ = abgespeicherter Filterwert
$x_k$ = der aktuelle Meßwert und
$a$, $b$ = Systemparameter

sind. Der aktuelle Filterwert $y_k$ wird mit einem bereits abgespeicherten, maximalen Filterwert verglichen. Sofern der aktuelle Filterwert größer ist als der bereits abgespeicherte, maximale Filterwert, wird dieser durch den aktuellen Filterwert ersetzt. Am Ende des Meßvorganges, dessen Beginn und Ende durch Über- bzw. Unterschreitung des Schwellenbandes 17 durch die Meßwerte $x_k$ gesteuert wird, kann die Radlast aus dem maximalen Filterwert und dem Schwellenwert bestimmt werden. Durch Mittelwertbildung der maximalen Filterwerte aus den Meßsignalen mehrerer aufeinanderfolgender Meßstellen kann das Ergebnis verbessert werden.

## Ansprüche

1. Verfahren zum Bestimmen der Radlasten schnellfahrender Schienenfahrzeuge aus dem Meßsignal wenigstens einer Meßstelle mit wenigstens einem am Steg einer Schiene in Höhe der neutralen Faser befestigten Dehnungsmeßstreifen, dessen Hauptwirkungsrichtung zur Messung der Stauchung des Steges beim Überlauf des Rades orthogonal zur neutralen Faser angeordnet ist, wobei das Meßsignal oberhalb eines Schwellenwertes erfaßt sowie in digitale Meßwerte umgesetzt wird und aus aufeinanderfolgenden Meßwerten eine Ausgleichsfunktion gebildet wird, aus deren Maximum und dem Schwellenwert die Radlast bestimmt wird, **dadurch gekennzeichnet,** daß die anfallenden digitalen Meßwerte einzeln und nacheinander einem rekursiven Tiefpaßfilter wenigstens zweiter Ordnung zugeführt werden, daß der aktuelle Filterwert abgespeichert wird und daß die Radlast aus dem maximalen Filterwert und dem Schwellenwert bestimmt wird.

2. Verfahren nach Anspruch 1, **dadurch gekennzeichnet,** daß die Meßwerte mit einem Filte-ralgorithmus der Formel

$$y_k = a \cdot y_{k-1} - b \cdot y_{k-2} + x_k$$

behandelt werden, wobei
$y_k$ = der aktuelle Filterwert
$y_{k-1}, y_{k-2}$ = abgespeicherte Filterwerte
$x_k$ = der aktuelle Meßwert und
a, b = Systemparamter
sind.

3. Verfahren nach Anspruch 1 oder 2, **dadurch gekennzeichnet,** daß der aktuelle Filterwert mit dem maximalen Filterwert verglichen wird und daß nur der maximale Filterwert abgespeichert wird.

4. Verfahren nach einem der Ansprüche 1 - 4, **dadurch gekennzeichnet,** daß die Radlast durch Mittelwertbildung der maximalen Filterwerte aus den Meßsignalen mehrerer aufeinanderfolgender Meßstellen bestimmt wird.

5. Vorrichtung zur Durchführung des Verfahrens nach einem der Ansprüche 1 - 4 mit wenigstens einem Meßverstärker, einem dem Meßverstärker nachgeschalteten Analog-Digital-Wandler und einem auf einen Schwellenwert einstellbaren Trigger und einem Prozessor, **dadurch gekennzeichnet,** daß der Prozessor (16) ein rekursives Tiefpaßfilter zweiter Ordnung aufweist.

Fig. 1

Fig. 2